**Europäisches Patentamt**

**European Patent Office**

**Office européen des brevets**

(11) Veröffentlichungsnummer: **0 382 051**
**A2**

(12) **EUROPÄISCHE PATENTANMELDUNG**

(21) Anmeldenummer: **90101787.1**

(22) Anmeldetag: **30.01.90**

(51) Int. Cl.⁵: **C08G 18/66, C08G 18/76, A43B 5/00**

(30) Priorität: **07.02.89 DE 3903537**

(43) Veröffentlichungstag der Anmeldung:
**16.08.90 Patentblatt 90/33**

(84) Benannte Vertragsstaaten:
**AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32 a**
**D-6700 Ludwigshafen(DE)**
Erfinder: **Steinberger, Rolf, Dr.**
**Am Moenchhof 77**
**D-6707 Schifferstadt(DE)**
Erfinder: **Heckmann, Walter, Dr.**
**Geiersbergstrasse 2**
**D-6940 Weinheim(DE)**
Erfinder: **Schulz, Harald**
**Felix-Ueberbeck-Strasse 9**
**D-2848 Vechta(DE)**

(54) **Kälteschlagzähe, gut fliessfähige, thermoplastische Polyurethan-Elastomerzusammensetzungen, Verfahren zu ihrer Herstellung und ihre Verwendung.**

(57) Gegenstand der Erfindung sind kälteschlagzähe, gut fließfähige, thermoplastische Polyurethan-Elastomerzusammensetzungen, die bestehen aus

A) 5 bis 95 Gew.-Teilen mindestens eines thermoplastischen Polyurethan-Elastomeren (A) mit einer Shorte Härte A von kleiner als 95 und

B) 95 bis 5 Gew.-Teilen mindestens eines thermoplastischen Polyurethan-Elastomeren (B) mit einer Shore Härte A von größer als 98, wobei sich die Gew.-Teile von (A) und (B) zu 100 Gew.-Teilen ergänzen und

C) 0 bis 60 Gew.%, bezogen auf das Gewicht von (A) und (B), eines verstärkend wirkenden Füllstoffs.

Die Produkte werden hergestellt durch Zusammenschmelzen der Polyurethan-Elastomeren (A) und (B) bei Temperaturen von 140 bis 250°C, vorzugsweise in einem Extruder, und eignen sich insbesondere zur Herstellung von Skistiefeln und Spritzgußformteilen für Kraftfahrzeuge.

## Kälteschlagzähe, gut fließfähige, thermoplastische Polyurethan-Elastomerzusammensetzungen, Verfahren zu ihrer Herstellung und ihre Verwendung

Erfindungsgegenstände sind kälteschlagzähe, gut fließfähige, thermoplastische Polyurethan-Elastomerzusammensetzungen, die im wesentlichen bestehen aus einer Mischung aus thermoplastischen Polyurethan-Elastomeren (A) und (B) unterschiedlicher Härte und gegebenenfalls verstärkend wirkenden Füllstoffen sowie ihre Herstellung und Verwendung.

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung verschiedenartiger chemischer Aufbaukomponenten in unterschiedlichen Mengenverhältnissen können Produkte hergestellt werden, die sich hinsichtlich ihrer Verarbeitbarkeit und ihren mechanischen Eigenschaften vielfältig unterscheiden. Eine Übersicht über TPU, ihre Eigenschaften und Anwendungen wird z.B. in Kunststoffe 68 (1978), Seiten 819-825 oder im Kunststoff-Handbuch, Band 7, Polyurethane, 2. Auflage, herausgegeben von Dr. G. Oertel (Carl-Hanser-Verlag, München, Wien 1983) gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A-10 57 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130°C erhitzten Ofen geführt, bis es erstarrt. Das Reaktionsprodukt wird danach zerkleinert, bei Temperaturen bis 120°C 6 bis 40 Stunden getempert und kann so, z.B. mit Spritzgußmaschinen zu Formkörpern verarbeitet werden. Das Nachtempern und das zerkleinern sind hierbei Arbeitsgänge, die das Bandverfahren wirtschaftlich belasten.

Nach einer anderen Verfahrensvariante können die linearen Polyhydroxylverbindungen, das niedermolekulare Diol und das organische Diisocyanat in getrennten Leitungen einem Mischkopf zugeführt, dort gemischt und die erhaltene Reaktionsmischung auf das Förderband aufgebracht werden.

Beim Extruderverfahren, das z.B. in der DE-A-20 59 570 (US-A-3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU mit Shore-A-Härten bis zu 95 für die Herstellung von Folien oder von feinen Profilen und Schläuchen nicht geeignet sind. Vielfach blocken und kleben derartige Folien so stark, daß eine Weiterverarbeitung nicht möglich ist.

Zur Beseitung dieses Nachteils werden in der EP-A-111 682 (CA 1 236 239) gut entformbare und nicht blockende TPU beschrieben, die im wesentlichen bestehen aus 50 bis 99,5 Gew.% eines TPU (A) mit einem Gehalt an Urethangruppen von 10 bis 50 Gew.% und einem Schmelzindex bei 190°C von 0,1 bis 100 und 0,5 bis 50 Gew.% eines TPU (B) mit einem Gehalt an Urethangruppen von 20 bis 60 Gew.% und einem Schmelzindex bei 190°C von 10 bis 1000, wobei der Urethangruppengehalt des TPU (B) stets um mindestens 10 Gew.% größer ist als der von TPU (A) und der Schmelzindex des TPU (B) bei der Schmelztemperatur gleich oder größer ist als der von TPU (A).

Aus der US-A-3 284 539 bekannt sind stabile TPU-Formmassen, die hergestellt werden durch Zusammenschmelzen eines TPU mit endständigen Hydroxylgruppen und eines TPU mit endständigen Isocyanatgruppen. Nachteilig an diesen TPU-Formmassen und den vorgenannten nicht blockenden TPU, insbesondere solchen mit Härten von Shore A größer als 95, sind ihre unbefriedigende Kälteschlagzähigkeit und die schlechte Fließfähigkeit.

Ein unbefriedigendes Erstarrungsverhalten, verbunden mit einer unzureichenden Kälteschlagzähigkeit zeigen auch TPU-Formmassen aus harten und weichen TPU gemäß US-A-4 129 611. Nach Angaben dieser Patentschrift werden weiche TPU, hergestellt aus organischen Polyisocyanaten und höhermolekularen Polyhydroxylverbindungen oder Mischungen mit durchschnittlichen Hydroxyläquivalentgewichten von mindestens 200 aus höhermolekularen Polyhydroxylverbindungen und niedermolekularen Kettenverlängerungsmitteln, und harte TPU, hergestellt aus organischen Polyisocyanaten und Verbindungen mit reaktiven Wasserstoffatomen und einem durchschnittlichen Hydroxyläquivalentgewicht von keiner als 100, in der Schmelze oder vorzugsweise in Form einer Lösung, z.B. in Dimethylformamid als Lösungsmittel, gemischt.

Die Aufgabe der vorliegenden Erfindung bestand darin TPU-Zusammensetzungen zu entwickeln, die die obengenannten Nachteile nicht aufweisen und die mit einer hervorragenden Fließfähigkeit zu extrem

2

kälteschlagzähen Formkörpern verspritzt werden können.

Diese Aufgabe konnte überraschenderweise gelöst werden mit TPU-Zusammensetzungen, basierend auf einer Mischung aus TPU's mit unterschiedlichen Härten und gegebenenfalls verstärkend wirkenden Füllstoffen, wobei die TPU's hergestellt werden durch Umsetzung von

a) organischen, vorzugsweise aromatischen Diisocyanaten, mit

b) Polyhydroxylverbindungen, vorzugsweise im wesentlichen linearen Polyhydroxylverbindungen mit Molekulargewichten von 500 bis 8000, und

c) Diolen mit Molekulargewichten von 60 bis 400 in einem Äquivalenzverhältnis von NCO-Gruppen der organischen Diisocyanate (a) zur Summe der Hydroxylgruppen der Komponenten (b) und (c) von 1,0:1,0 bis 1,2:1,0,

und die TPU-Zusammensetzungen dadurch gekennzeichnet sind, daß diese im wesentlichen bestehen aus

A) 5 bis 95 Gew.-Teilen, vorzugsweise 10 bis 80 Gew.-Teilen mindestens eines TPU (A) mit einer Shore-Härte A von kleiner als 95, vorzugsweise von 95 bis 60 und

B) 95 bis 5 Gew.-Teilen, vorzugsweise 90 bis 20 Gew.-Teilen mindestens eines TPU (B) mit einer Shore-Härte A von größer als 98, vorzugsweise einer Härte nach Shore A von 98 bis Shore D von 80, wobei sich die Gew.-Teile von TPU (A) und (B) zu 100 Gew.-Teilen ergänzen und

C) 0 bis 60 Gew.%, vorzugsweise 2 bis 50 Gew.%, bezogen auf das Gewicht der TPU (A) und (B), eines verstärkend wirkenden Füllstoffs mit der Maßgabe, daß die Weichsegmente der TPU (A) und (B) entweder beide aus Polyester- oder beide aus Polyethersegmenten bestehen.

Gegenstände der Erfindung sind ferner ein Verfahren zur Herstellung der erfindungsgemäßen TPU-Zusammensetzungen, wobei man die weichen TPU (A) und harten TPU (B) bei Temperaturen von 140 bis 250°C zusammenschmelzt, der Schmelze gegebenenfalls verstärkend wirkende Füllstoffe einverleibt, diese danach abkühlen läßt und die verfestigte TPU-Zusammensetzung zerkleinert und die Verwendung der TPU-Zusammensetzungen, insbesondere zur Herstellung von Skistiefeln und Spritzgußformteilen für Kraftfahrzeuge.

Die erfindungsgemäßen TPU-Zusammensetzungen besitzen eine Härte nach Shore A von 90 bis Shore D von 70, vorzugsweise nach Shore A von 98 bis Shore D von 68 und weisen im Vergleich zu konventionellen TPU's gleicher Härte eine erheblich bessere Fließfähigkeit auf, die sich insbesondere bei der Herstellung großflächiger Formteile mit komplizierten Raumformen nach der Spritzgußtechnik vorteilhaft auswirkt. Bemerkenswert ist ferner die ausgezeichnete Kälteschlagzähigkeit der Formkörper, die ihre Verwendungsmöglichkeit im Kraftfahrzeugaußenbereich stark begünstigt.

Die erfindungsgemäß verwendbaren TPU (A) und (B) können durch Umsetzung von

a) organischen Diisocyanaten,

b) Polyhydroxylverbindungen mit Molekulargewichten von 500 bis 8000 und

c) Diolen als Kettenverlängerungsmitteln mit Molekulargewichten von 60 bis 400 in Gegenwart von

d) Katalysatoren und gegebenenfalls

e) Hilfsmitteln und/oder

f) Zusatzstoffen bei erhöhten Temperaturen hergestellt werden.

Zu den Aufbaukomponenten (a) bis (d) und gegebenenfalls (e) und/oder (f) ist folgendes auszuführen:

a) als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-di-isocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhex-

3

andiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difu onell aufgebaut sein. Die genannten Polyhydroxylverbindungen können als Einzelkomponenten oder in m von Mischungen zur Anwendung kommen.

Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4

4

Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon.

Zur Einstellung von Härte und Schmelzindex können die Aufbaukomponenten in relativ breiten molaren Verhältnissen variiert werden, wobei die Härte und der Schmelzviskosität mit zunehmendem Gehalt an Kettenverlängerungsmittel (c) ansteigt, während der Schmelzindex abnimmt.

Zur Herstellung der weichen TPU (A) mit einer Härte Shore A von kleiner als 95 werden die im wesentlichen difunktionellen Polyhydroxylverbindungen (b) und Diolen (c) vorteilhafterweise in Molverhältnissen von 1:1 bis 1:5, vorzugsweise von 1:1,5 bis 1:4,5 verwendet, so daß die resultierenden Mischungen aus (b) und (c) ein Hydroxyläquivalentgewicht von größer als 200, und insbesondere von 230 bis 450 besitzen, während zur Herstellung der harten TPU (B) mit einer Härte Shore A von größer als 98 die Molverhältnisse von (b) : (c) im Bereich von 1:5,5 bis 1:15, vorzugsweise von 1:6 bis 1:12 liegen, so daß die erhaltenen Mischungen aus (b) und (c) ein Hydroxyläquivalentgewicht von 110 bis 200, vorzugsweise von 120 bis 180 aufweisen.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, Diazabicyclo-(2,2,2)-octan und ähnliche sowie insbesondere organische Metallverbindungen wie Titansäureester, Eisenverbindungen, Zinnverbindungen, z.B. zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Hilfsmittel (e) und/oder Zusatzstoffe (f) können hierzu, wie bereits ausgeführt wurde, in die Aufbaukomponenten oder in die Reaktionsmischung zur Herstellung der TPU (A) und/oder TPU (B) eingebracht werden. Nach den bevorzugt angewandten Verfahren werden die Hilfsmittel und/oder Zusatzstoffe, insbesondere die verstärkend wirkenden Füllstoffe, jedoch mit den TPU (A) und TPU (B) gemischt und anschließend verschmolzen oder insbesondere direkt der Schmelze aus TPU (A) und (B) einverleibt.

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 1,00 bis 1,20:1, vorzugsweise 1,00 bis 1,05:1 und insbesondere 1,00 bis 1,025:1 beträgt.

Die erfindungsgemäß verwendbaren weichen TPU (A) mit einer Shore Härte A von kleiner as 95 enthalten üblicherweise 10 bis 60 Gew.%, vorzugsweise 15 bis 40 Gew.%, bezogen auf das Gesamtgewicht, Urethangruppen gebunden und weisen einen Schmelzindex bei 190°C von 0,1 bis 100, vorzugsweise 1 bis 80 auf. Die TPU (A) können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein das erhaltene TPU (A) vor der Weiterverarbeitung zu den erfindungsgemäßen TPU-Zusammensetzungen bei 80 bis 120°C, vorzugsweise 100 bis 110°C über einen Zeitraum von 1 bis 24 Stunden zu tempern.

Die erfindungsgemäß verwendbaren harten TPU (B) mit einer Shore Härte A von größer als 98 enthalten üblicherweise 45 bis 75 Gew.%, vorzugsweise 50 bis 75 Gew.%, bezogen auf das Gesamtgewicht, Urethangruppen gebunden. Die TPU (B) werden insbesondere nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 100 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden harte TPU (B) mit einer sehr niedrigen Schmelzviskosität bzw. einem hohen Schmelzindex erhalten.

Für die Herstellung der neuen TPU-Zusammensetzungen ist erfindungswesentlich, daß nur solche TPU (A) und (B) miteinander verschmolzen werden, die entweder beide Polyesterweichsegmente oder beide Polyetherweichsegmente gebunden enthalten, da nur derartige Kombinationen homogene TPU-Zusammensetzungen ergeben.

Neben den erfindungswesentlichen Komponenten TPU (A) und TPU (B) können die erfindungsgemäßen TPU-Zusammensetzungen auch verstärkend wirkende Füllstoffe enthalten. Der Anteil dieser Komponente (C) beträgt üblicherweise 0 bis 60 Gew.%, vorzugsweise 2 bis 50 Gew.% und insbesondere 5 bis 40 Gew.%, bezogen auf das Gesamtgewicht der TPU (A) und (B).

Als geeignete Füllstoffe kommen beispielsweise in Betracht: organische Füllstoffe wie z.B. Ruß, chlorierte Polyethylene und Melamine und anorganische Füllstoffe, wie z.B. Wollastonit, Calciumcarbonat, Magnesiumcarbonat, amorphe Kieselsäure, Calciumsilikat, Calciummetasilikat, Quarzmehl, Talkum, Kaolin, Glimmer, Feldspat, Glaskugeln, Si- oder Bornitrid sowie Mischungen dieser Füllstoffe.

Als Verstärkungsmittel besonders bewährt haben sich und daher vorzugsweise Anwendung finden Fasern, beispielsweise Kohlenfasern oder insbesondere Glasfasern, besonders dann, wenn eine hohe Wärmeformbeständigkeit gefordert wird, wobei die Fasern mit Haftvermittlern und/oder Schlichten ausgerüstet sein können. Geeignete Glasfasern, die z.B. auch in Form von Glasgeweben, -matten, -vliesen und/oder vorzugsweise Glasseidenrovings oder geschnittener Glasseide aus alkaliarmen E-Glasern mit einem Durchmesser von 5 bis 200 $\mu$m, vorzugsweise 6 bis 15 $\mu$m eingesetzt werden, weisen nach ihrer Einarbeitung in die TPU-Zusammensetzung im allgemeinen eine mittlere Faserlänge von 0,05 bis 1 mm, vorzugsweise von 0,1 bis 0,5 mm auf.

Wie bereits ausgeführt wurde, können den erfindungsgemäßen TPU-Zusammensetzungen oder den hierfür geeigneten TPU (A) und/oder TPU (A) Hilfsmittel und/oder Zusatzstoffe einverleibt werden. Sofern derartige Einsatzstoffe Anwendung finden, beträgt ihr Anteil, bezogen auf das Gesamtgewicht der TPU (A) und (B) im allgemeinen bis zu 20 Gew.%, vorzugsweise bis zu 10 Gew.% und insbesondere 0,01 bis 5 Gew.%.

Im einzelnen seien beispielhaft genannt: Flammschutzmittel, wie z.B. Melamin, Polyhalogendiphenyl, Polyhalogendiphenylether, Polyhalogenphthalsäure und ihre Derivate, Polyhalogenoligo- und -Polycarbonate, wobei die entsprechenden Bromverbindungen besonders wirksam sind. Als Flammschutzmittel eignen sich auch Phosphorverbindungen, wie elementarer Phosphor oder organische Phosphorverbindungen. Außerdem enthalten die Flammschutzmittel in der Regel zusätzlich einen Synergisten, z.B. Antimontrioxid.

Als Keimbildungsmittel können z.B. Talkum, Calciumfluorid, Natriumphenylphosphinat, Aluminiumoxid und feinteiliges Polytetrafluorethylen in Mengen bis zu 5 Gew.%, bezogen auf das Gewicht von TPU (A) und (B) eingesetzt werden.

Geeignete Oxidationsverzögerer und Wärmestabilisatoren, die den TPU-Zusammensetzungen zugesetzt werden können, sind beispielsweise sterisch gehinderte Phenole, Hydrochinone, sowie substituierte Verbindungen dieser Gruppen und Mischungen davon, die vorzugsweise in Konzentrationen bis zu 1 Gew.%, bezogen auf das Gewicht von TPU (A) und (B) verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.%, bezogen auf das Gewicht der TPU (A) und (B) eingesetzt werden.

Gleit- und Entformungsmittel, die in der Regel ebenfalls in Mengen bis zu 1 Gew.%, bezogen auf das Gewicht der TPU (A) und (B) zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Die erfindungsgemäßen TPU-Zusammensetzungen können nach beliebigen bekannten Verfahren hergestellt werden, bei denen aus den TPU (A) und (B) und gegebenenfalls verstärkend wirkenden Füllstoffen (C) im wesentlichen homogene Zusammensetzungen erhalten werden. Beispiele können die Komponenten TPU (A), TPU (B) und (C) bei Temperaturen von 0 bis 150°C, vorzugsweise 15 bis 30°C gemischt und

6

anschließend verschmolzen werden oder die Komponenten können direkt in der Schmelze vermischt werden. Nach einer anderen Verfahrensvariante können TPU (A) mit (C) oder TPU (B) mit (C) gemischt werden und diese Mischungen in TPU (B) bzw. TPU (A) eingearbeitet werden.

Die Herstellung der erfindungsgemäßen TPU-Zusammensetzung erfolgt bei Temperaturen im Bereich von 140 bis 250°C, vorzugsweise 190 bis 240°C und einer Verweilzeit von 0,5 bis 10 Minuten, vorzugsweise von 0,5 bis 3 Minuten in beispielsweise fließfähigem, erweichten oder vorzugsweise geschmolzenem Zustand der TPU (A) und TPU (B) z.B. durch Rühren, Walzen, Kneten oder vorzugsweise Extrudieren, beispielsweise unter Verwendung von üblichen Plastifizierungsvorrichtungen wie z.B. Brabender- oder Banburg-Mühlen, Knetern und Extrudern, vorzugsweise eines Doppelschnecken- oder Preßspritzmischextruders.

Nach dem zweckmäßigsten und daher vorzugsweise angewandten Herstellungsverfahren werden die TPU (A) und (B) gemischt, bei Temperaturen von 140 bis 250°C, vorzugsweise in einem Extruder, zusammengeschmolzen, der Schmelze gegebenenfalls die Komponente (C) einverleibt und diese danach abkühlen gelassen und die erhaltenen TPU-Zusammensetzungen zerkleinert.

Die erfindungsgemäßen TPU-Zusammensetzungen lassen sich leicht zu Formkörpern mit guter Oberflächenbeschaffenheit und verbesserter Schlagzähigkeit bei hoher Steifigkeit, insbesondere bei tiefen Temperaturen, verarbeiten, wobei weder in der Schmelze noch im Formkörper eine Entmischung der TPU (A) und (B) eintritt.

Die Zusammensetzungen finden vorzugsweise Verwendung zur Herstellung von Formkörpern, insbesondere von Skistiefeln und großflächigen Spritzgußformteilen für Kraftfahrzeuge, vorzugsweise Automobilaußenteile wie z.B. Stoßfängern, Frontschürzen, Heckspoiler und Seitenstoßkanten. Sie eignen sich ferner für Formteile im Wageninnern, wie z.B. als Konsolenabdeckungen, Armlehnen und Griffen.

Beispiele

Herstellung von weichen TPU (A)

Beispiel 1

1000 g (0,497 mol) eines Poly-butandiol-1,4-adipats mit einem Molekulargewicht von ungefähr 2000 (OH-Zahl 56,1) und

82,3 g (0,913 mol) Butandiol-1,4 wurden bei 75°C gemischt. In die erhaltene Mischung, die ein Hydroxyläquivalentgewicht von 384 besaß, wurden unter intensivem Rühren bei 75°C

360 g (1,44 mol) 4,4'-Diphenylmethan-diisocyanat eingebracht, entsprechend einem NCO-/OH-Äquivalenzverhältnis von 1,02:1.

Die Reaktionsmischung wurde in eine auf 150°C temperierte Metallwanne gegossen und bei dieser Temperatur die Reaktion in 15 Minuten zu Ende geführt. Die Schichtdicke betrug 0,5 cm.

Das Reaktionsprodukt, das man über einen Zeitraum von 24 Stunden auf 80°C beließ, wobei es sich verfestigte, wurde anschließend granuliert.

Das erhaltene TPU (A) besaß eine Shore Härte A von 80.

Beispiele 2 bis 6

Man verfuhr analog den Angaben des Beispiels 1, verwendete jedoch die in Tabelle 1 genannten Ausgangskomponenten und Mengen.

In der Tabelle 1 wurden folgende Abkürzungen verwendet:

BuOH : Butandiol-1,4

4,4'-MDI : 4,4'-Diphenylmethan-diisocyanat

OH-ÄG : Hydroxyläquivalentgewicht der Mischung aus Polyhydroxylverbindung und Butandiol-1,4

NCO-Index: Äquivalenzverhältnis von NCO- zur Summe der OH-Gruppen

Tabelle 1

| Beispiele | Polyhydroxylverbindung Art | Menge | | BuOH | | OH-ÄG | 4,4′-MDI | | NCO-Index | TPU (A) Härte Shore A |
|---|---|---|---|---|---|---|---|---|---|---|
| | | [g] | [Mol] | [g] | [Mol] | | [g] | [Mol] | | |
| 2 | Poly-butandiol-1,4-adipat (Molekulargewicht ungefähr 2000; Hydroxylzahl 56,1) | 1000 | 0,497 | 68,0 | 0,755 | 427 | 320 | 1,28 | 1,02 | 75 |
| 3 | Poly-butandiol-1,4-adipat (Molekulargewicht ungefähr 2000; Hydroxylzahl 56,1) | 1000 | 0,497 | 160 | 1,78 | 255 | 580 | 2,32 | 1,02 | 92 |
| 4 | Poly(ethylenglykol-butandiol-1,4)-adipat (Molekulargewicht ungefähr 2000, Hydroxylzahl 56,3, Ethylenglykol/BuOH-Verhältnis 1:1) | 1000 | 0,499 | 78,5 | 0,871 | 394 | 350 | 1,40 | 1,02 | 80 |
| 5 | Poly-butandiol-1,4-hexandiol-1,6)adipat (Molekulargewicht ungefähr 2000, Hydroxylzahl 56,0) | 1000 | 0,497 | 77 | 0,854 | 398 | 345 | 1,38 | 1,02 | 78 |
| 6 | Polyoxytetramethylenglykol (Molekulargewicht ungefähr 1300; Hydroxylzahl 86) | 1000 | 0,763 | 86,5 | 0,960 | 315 | 440 | 1,76 | 1,02 | 80 |

EP 0 382 051 A2

Herstellung von hartem TPU (B)


Beispiel 7

1000 g (0,497 mol) eines Poly-butandiol-1,4-adipats mit einem Molekulargewicht von ungefähr 2000 (OH-Zahl 56,1) und

528 g (5,86 mol) Butandiol-1,4 wurden bei 75°C gemischt. In die erhaltene Mischung, die ein Hydroxyläquivalentgewicht von 120 besaß, wurden unter intensivem Rühren bei 75°C

160,0 g (6,39 mol) 4,4'-Diphenylmethan-diisocyanat eingebracht, entsprechend einem NCO-/OH-Äquivalenzverhältnis von 1,005:1.

Die Reaktionsmischung wurde in einer Schichtdicke von 0,5 cm in eine auf 170°C temperierte Metallwanne gegossen und die Reaktion innerhalb von 15 Minuten zu Ende geführt.

Das Reaktionsprodukt, das man über einen Zeitraum von 24 Stunden auf 80°C beließ, wobei es sich verfestigte, wurde danach granuliert.

Das erhaltene TPU (B) besaß eine Shore Härte D von 74 und einen Gehalt an freien NCO-Gruppen von 0,23 Gew.%, bezogen auf das Gesamtgewicht.


Beispiele 8 bis 12

Man verfuhr analog den Angaben des Beispiels 7, verwendete jedoch die in Tabelle 2 genannten Ausgangsstoffe und Mengen.

In Tabelle 2 wurden ebenfalls die vorgenannten Abkürzungen verwendet.

Tabelle 2

| Beispiele | Polyhydroxylverbindung Art | Menge | | BuOH | | OH-ÄG | 4,4'-MDI | | NCO-Index | TPU (A) | |
| --- | --- | --- | --- | --- | --- | --- | --- | --- | --- | --- | --- |
| | | [g] | [Mol] | [g] | [Mol] | | [g] | [Mol] | | NCO-Gehalt [Gew.-%] | Härte Shore |
| 8 | Poly(ethylenglykol-butandiol-1,4)-adipat (Molekulargewicht ungefähr 2000, Hydroxylzahl 56,5; Ethylenglykol/BuOH-verhältnis 1:1) | 1000 | 0,501 | 510 | 5,66 | 123 | 1550 | 6,19 | 1,005 | 0,15 | D 74 |
| 9 | Poly(butandiol-1,4-hexandiol-1,6)-adipat (Molekulargewicht ungefähr 2000, Hydroxylzahl 56, 1, BuOH/Hexandiolverhältnis 1:2) | 1000 | 0,497 | 529 | 5,87 | 120 | 1600 | 6,39 | 1,005 | 0,16 | D 74 |
| 10 | Poly-butandiol-1,4-adipat (Molekulargewicht ungefähr 2000, Hydroxylzahl 56,1) | 1000 | 0,497 | 349 | 3,87 | 154 | 1100 | 4,40 | 1,005 | 0,14 | D 64 |
| 11 | Poly-butandiol-1,4-adipat (Molekulargewicht ungefähr 2000, Hydroxylzahl 56,1) | 1000 | 0,497 | 278 | 3,08 | 178 | 900 | 3,60 | 1,005 | 0,15 | D 60 |
| 12 | Polyoxytetramethylenglykol (Molekulargewicht ungefähr 1000, Hydroxylzahl 112,2) | 1000 | 0,995 | 556 | 6,17 | 109 | 1800 | 7,19 | 1,003 | 0,18 | D 74 |

EP 0 382 051 A2

Herstellung der TPU-Zusammensetzungen

Beispiele 13 bis 23 und Vergleichsbeispiele I bis III

Zur Herstellung der TPU-Zusammensetzungen wurden die TPU (A) und TPU (B) in Granulatform bei 25°C gemischt, die Mischung einem Zweischneckenextruder zugeführt, in diesem bei 230°C aufgeschmolzen und homogenisiert. Bei Mitverwendung von Glasfasern wurden diese in Form von Schnittfasern oder Rovings der homogenisierten Schmelze einverleibt.

Die erhaltene Schmelze wurde in ein Wasserbad extrudiert, danach granuliert und getrocknet.

Aus den granulierten TPU-Zusammensetzungen wurden mittels einer Spritzgußmaschine bei 230°C Prüfkörper geformt, an denen ohne weitere Nachbehandlung die mechanischen Eigenschaften gemessen wurden.

Die Art und Menge der verwendeten TPU (A) und (B) und die an den Prüfkörpern gemessenen mechanischen Eigenschaften sind in Tabelle 3 zusammengefaßt.

Ermittelt wurden die Kerbschlagzähigkeit nach DIN 53 453, der Elastizitätsmodul nach DIN 53 457, die Härte und der Schmelzindex (MFI) bei einem Auflagegewicht von 21,6 kg.

Tabelle 3

| Beispiele | Einsatzstoffe | | | | mechanische Eigenschaften der TPU-Zusammensetzungen | | | | | | |
|---|---|---|---|---|---|---|---|---|---|---|---|
| | TPU (A) | | TPU (B) | | Zug-E-Modul [N/mm$^2$] | Kerbschlagzähigkeit [kJ/m$^2$] | | | Shore Härte | MFI [g/10 Min] | bei Masse Temp. [$^\circ$C] |
| | Menge [Gew.-Teile] | Art [n.Bsp.] | Menge [Gew.-Teile] | Art [n.Bsp.] | | -20$^\circ$C | -30$^\circ$C | -40$^\circ$C | | | |
| 13 | 35 | 5 | 65 | 7 | 320 | 19 | 6,8 | 4,3 | D 60 | 100 | 215 |
| 14 | 35 | 5 | 65 | 8 | 340 | 17 | 5,6 | 4,0 | D 61 | 110 | 215 |
| 15 | 25 | 5 | 75 | 8 | 410 | 12 | 4,3 | 3,8 | D 64 | 60 | 215 |
| 16 | 35 | 5 | 65 | 9 | 280 | 25 | 9,2 | 6,1 | D 59 | 50 | 210 |
| 17 | 60 | 1 | 40 | 10 | 75 | o.Br. | o.Br. | 15 | A 92 | 60 | 205 |
| 18 | 50 | 1 | 50 | 11 | 100 | o.Br. | o.Br. | 12 | A 93 | 55 | 205 |
| 19 | 50 | 2 | 50 | 11 | 45 | o.Br. | o.Br. | 20 | A 90 | 100 | 205 |
| 20 | 50 | 3 | 50 | 10 | 205 | o.Br. | 14 | 6,8 | D 56 | 40 | 210 |
| 21 | 35 | 4 | 65 | 8 | 360 | 15 | 5,9 | 4,1 | D 62 | 80 | 215 |
| 22 | 25 | 6 | 75 | 12 | 280 | o.Br. | 15 | 8,3 | D 64 | 90 | 210 |
| 23 | 20 | 6 | 80 | 12 | 320 | 41 | 12 | 7,5 | D 66 | 70 | 210 |
| Vergleichsbeispiele | | | | | | | | | | | |
| I | 100 | 3 | - | - | 80 | o.Br. | 18 | 5,8 | A 92 | 70 | 215 |
| II | - | - | 100 | 10 | 400 | 5,6 | 2,5 | 2,4 | D 64 | 40 | 220 |
| III | - | - | 100 | 11 | 300 | 11 | 3,9 | 2,6 | D 60 | 55 | 220 |

**Ansprüche**

1. Kälteschlagzähe, gut fließfähige, thermoplastische Polyurethan-Elastomerzusammensetzungen, aufgebaut aus einer Mischung aus thermoplastischen Polyurethan-Elastomeren unterschiedlicher Härten und gegebenenfalls verstärkend wirkenden Füllstoffen, wobei die thermoplastischen Polyurethan-Elastomeren hergestellt werden durch Umsetzung von

a) organischen Diisocyanaten mit

b) Polyhydroxylverbindungen mit Molekulargewichten von 500 bis 8000 und

c) Diolen mit Molekulargewichten von 60 bis 400

in einem Äquivalenzverhältnis von NCO-Gruppen der organischen Diisocyanate (a) zur Summe der Hydroxylgruppen der Komponenten (b) und (c) von 1,0:1,0 bis 1,2:1,0, dadurch gekennzeichnet, daß die thermoplastischen Polyurethan-Elastomerzusammensetzungen im wesentlichen bestehen aus

A) 5 bis 95 Gew.-Teilen mindestens eines thermoplastischen Polyurethan-Elastomeren (A) mit einer Shore-Härte A von kleiner als 95,

B) 95 bis 5 Gew.-Teilen mindestens eines thermoplastischen Polyurethan-Elastomeren (B) mit einer Shore-Härte A von größer als 98, wobei sich die Gew.-Teile von (A) und (B) zu 100 Gew.-Teilen ergänzen und

C) 0 bis 60 Gew.%, bezogen auf das Gewicht von (A) und (B), eines verstärkend wirkenden Füllstoffs

mit der Maßgabe, daß die Weichsegmente der thermoplastischen Polyurethan-Elastomeren (A) und (B) entweder beide aus Polyester- oder beide aus Polyethersegmenten bestehen.

2. Kälteschlagzähe, gut fließfähige, thermoplastische Polyurethan-Elastomerzusammensetzungen nach Anspruch 1, dadurch gekennzeichnet, daß das thermoplastische Polyurethan-Elastomere (A) eine Härte nach Shore A von ungefähr 60 bis 95 und das thermoplastische Polyurethan-Elastomere (B) eine Härte nach Shore A von 98 bis Shore D von 80 besitzen.

3. Kälteschlagzähe, gut fließfähige, thermoplastische Polyurethan-Elastomerzusammensetzungen nach Anspruch 1, dadurch gekennzeichnet, daß diese eine Härte nach Shore A von 90 bis Shore D von 70 besitzen.

4. Kälteschlagzähe, gut fließfähige, thermoplastische Polyurethan-Elastomerzusammensetzungen nach einem der Ansprüche 1 bis 3, dadurch gekennzeichnet, daß die Polyurethan-Elastomeren hergestellt werden durch Umsetzung von organischen Diisocyanaten (a), vorzugsweise 4,4'-Diphenylmethan-diisocyanat, mit einer Mischung aus Polyhydroxylverbindungen (b) und Diolen (c) mit der Maßgabe, daß diese Mischung ein Hydroxyläquivalentgewicht von größer als 200 zur Bildung des Polyurethan-Elastomeren (A) und von 110 bis 200 zur Bildung des Polyurethan-Elastomeren (B) besitzt.

5. Kälteschlagzähe, gut fließfähige, thermoplastische Polyurethan-Elastomerzusammensetzungen nach einem der Ansprüche 1 bis 4, dadurch gekennzeichnet, daß die Polyurethan-Elastomeren (A) und (B) hergestellt werden durch Umsetzung von

a) aromatischen Diisocyanaten, vorzugsweise 4,4'-Diphenylmethan-diisocyanat, mit

b) im wesentlichen linearen Polyhdroxylverbindungen, vorzugsweise Polyalkylenglykolpolyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 8000, und

c) Butandiol-1,4.

6. Kälteschlagzähe, gut fließfähige, thermoplastische Polyurethan-Elastomerzusammensetzungen nach einem der Ansprüche 1 bis 5, dadurch gekennzeichnet, daß das Polyurethan-Elastomere (B) hergestellt wird nach dem Bandverfahren.

7. Kälteschlagzähe, gut fließfähige, thermoplastische Polyurethan-Elastomerzusammensetzungen nach einem der Ansprüche 1 bis 6, dadurch gekennzeichnet, daß das Polyurethan-Elastomer (B) noch 0,05 bis 1 Gew.% freie Isocyanatgruppen, bezogen auf das Gesamtgewicht besitzt.

8. Verfahren zur Herstellung von kälteschlagzähen, gut fließfähigen, thermoplastischen Polyurethan-Elastomerzusammensetzungen nach einem der Ansprüche 1 bis 7, dadurch gekennzeichnet, daß man die Polyurethan-Elastomeren (A) und (B) bei Temperaturen von 140 bis 250°C, vorzugsweise in einem Extruder, zusammenschmilzt, der Schmelze gegebenenfalls verstärkend wirkende Füllstoffe einverleibt, diese danach abkühlen läßt und die verfestigte Elastomerzusammensetzung zerkleinert.

9. Verwendung der kälteschlagzähen, gut fließfähigen, thermoplastischen Polyurethan-Elastomerzusammensetzungen nach einem der Ansprüche 1 bis 7 zur Herstellung von Skistiefeln.

10. Verwendung der kälteschlagzähen, gut fließfähigen, thermoplastischen Polyurethan-Elastomerzusammensetzungen nach einem der Ansprüche 1 bis 7 zur Herstellung von Spritzgußformteilen für Kraftfahr-

13

zeuge, vorzugsweise Automobilaußenteile.